Europäisches Patentamt

European Patent Office

Office européen des brevets

(19)

(11) Numéro de publication : **0 433 219 B1**

(12) **FASCICULE DE BREVET EUROPEEN**

(45) Date de publication du fascicule du brevet :
07.12.94 Bulletin 94/49

(51) Int. Cl.$^5$ : **H02P 6/02**

(21) Numéro de dépôt : **90810859.0**

(22) Date de dépôt : **08.11.90**

(54) **Circuit de commande pour moteur électrique sans collecteur.**

(30) Priorité : **10.11.89 CH 4059/89**

(43) Date de publication de la demande :
**19.06.91 Bulletin 91/25**

(45) Mention de la délivrance du brevet :
**07.12.94 Bulletin 94/49**

(84) Etats contractants désignés :
**DE FR GB IT NL**

(56) Documents cités :
**EP-A- 0 316 077**
**US-A- 4 743 815**

(56) Documents cités :
**ELEKTRONIK vol. 34, no. 22, octobre 1985,
MUENCHEN, DE pages 92-98 ; J. KMETZ:
"BUERSTENLOSER GLEICHSTROMMOTOR
ELEKTRONISCH GESTEUERT"
MACHINE DESIGN vol. 60, no. 18, 11 août
1988, CLEVELAND, US pages 109-114 ; J.
ALBERKRACK: "SELECTING BRUSHLESS DC
MOTOR CONTROLLER"**

(73) Titulaire : **PORTESCAP
Rue Jardinière 157
CH-2300 La Chaux-de-Fonds (CH)**

(72) Inventeur : **Antognini, Luciano
Chapelle 20b
CH-2035 Corcelles (CH)**

(74) Mandataire : **Hranitzky, Wilhelm Max et al
c/o WILLIAM BLANC & CIE
9, rue du Valais
CH-1202 Genève (CH)**

## Description

La présente invention concerne un circuit de commande pour un moteur électrique sans collecteur, du type comportant un rotor aimanté de façon à présenter au moins une paire de pôles magnétiques, et un stator muni d'un bobinage bi- ou polyphasé comprenant plusieurs bobines élémentaires de même impédance, ce circuit comportant des moyens électroniques de commutation agencés pour connecter les bobines élémentaires sélectivement, selon un cycle d'états d'alimentation successifs, aux bornes d'une source de courant, sous l'effet d'un signal de commande de commutation, des moyens pour détecter les tensions apparaissant aux bornes de bobines élémentaires ou de groupes de bobines élémentaires, et des moyens pour fournir, à partir desdites tensions détectées, ledit signal de commande de commutation.

Un circuit de commande de ce type a été décrit pour un moteur triphasé, dont les bobines élémentaires sont connectées en étoile, dans le brevet américain 4.743.815. Ce circuit détecte le passage par zéro de la force contre-électromotrice induite par le rotor dans une bobine élémentaire non-alimentée en courant et utilise un microprocesseur pour définir, à partir de ce passage par zéro, le point de commutation souhaité. Un tel circuit n'est applicable qu'au cas d'un moteur du type décrit et nécessite des moyens relativement importants pour produire un signal de commutation approprié.

La présente invention vise à fournir un circuit de commande utilisable pour des moteurs bi- ou polyphasés, dont les bobines élémentaires sont connectées en série et sont ainsi toutes alimentées dans chaque état d'alimentation du moteur. Elle a notamment pour but de permettre la détection d'une position du rotor située nettement avant la position détectée par le circuit connu et de permettre la production d'un signal de commutation par des moyens particulièrement simples et économiques. Un autre but de l'invention est l'obtention d'un tel signal de commutation indépendamment de la forme du courant d'alimentation du moteur.

A cet effet, le circuit selon l'invention présente les particularités mentionnées dans la partie caractéristique de la revendication 1. Les revendications 2 à 7 décrivent des formes d'exécution particulières du circuit selon l'invention.

Les buts, avantages et particularités de l'invention ressortiront plus clairement de la description suivante de différentes formes d'exécution, mentionnées à titre d'exemple et illustrées dans le dessin annexé, dans lequel:

la fig. 1 est un schéma du circuit de commande selon l'invention dans le cas d'un moteur biphasé,

la fig. 2 est un diagramme représentant des couples et tensions apparaissant dans le circuit de la fig. 1,

la fig. 3 est le schéma d'un circuit de commande, selon l'invention, pour un moteur triphasé,

la fig. 4 est un schéma partiel illustrant l'application du circuit selon l'invention à un moteur pentaphasé, et

les figures 5 et 6 sont des diagrammes représentant la variation des couples et tensions induites dans le cas, respectivement, des moteurs tri- et pentaphasés.

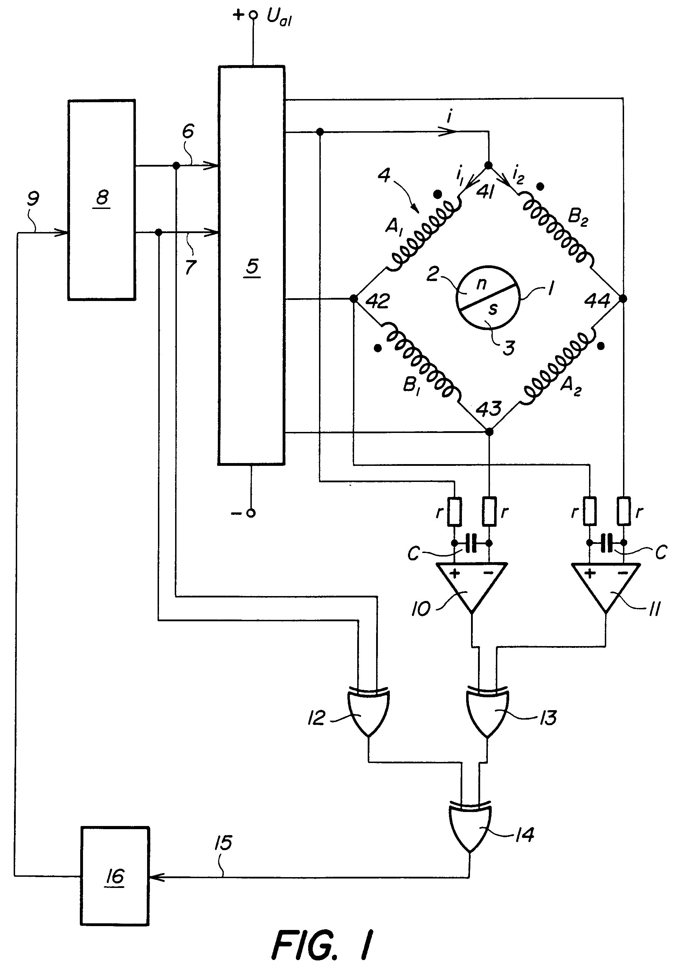

Dans le schéma de la fig. 1, on a montré symboliquement le rotor 1 d'un moteur biphasé, ce rotor étant aimanté de façon à présenter généralement un certain nombre de paires de pôles magnétiques n,s, représentées par une seule paire de pôles 2 et 3. Le stator du moteur selon la fig. 1 comporte un bobinage formé de quatre bobines élémentaires, dont les bobines $A_1$ et $A_2$ appartiennent à une première phase A, et les bobines $B_1$ et $B_2$ appartiennent à la deuxième phase B, en quadrature avec la première. Ces bobines élémentaires sont connectées en série et présentent les points de connexion communs 41,42,43,44. Le sens de l'enroulement de ces bobines est indiqué par un point et il est à noter que les bobines telles que représentées sont orientées consécutivement dans le même sens. Comme le montre la fig. 1, les bobines élémentaires d'une même phase se trouvent dans des branches opposées du circuit 41,42,43,44. Lorsque ces bobines sont parcourues par un courant constant, les bobines des phases A et B engendrent respectivement des couples $M_a$ et $M_b$ qui varient avec la position mécanique $\alpha$ du rotor, et peuvent s'exprimer sous la forme suivante:

$$M_a = K. \sin N\alpha$$
$$M_b = K. \cos N\alpha$$

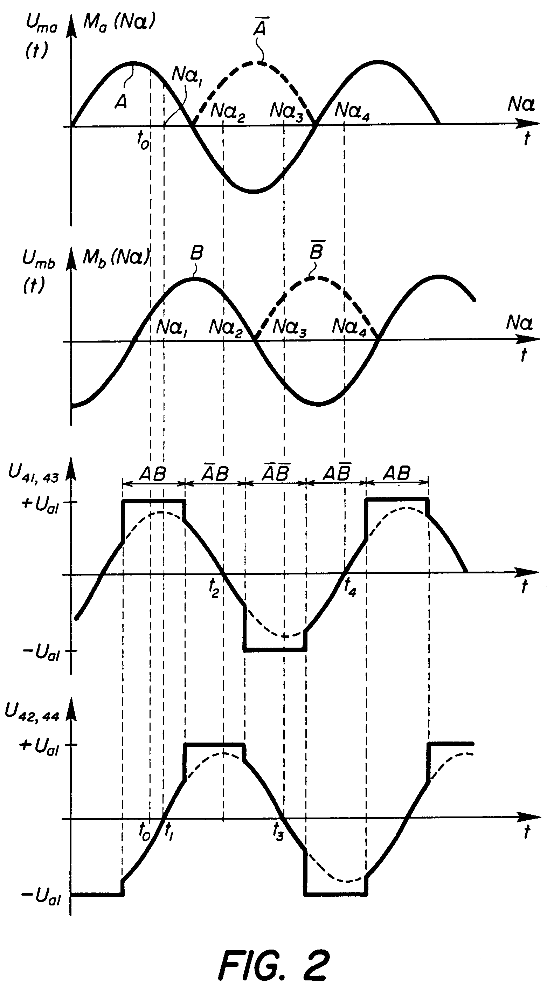

où K est une constante liée aux caractéristiques propres du circuit magnétique et des bobines associés à chaque phase, et N est le nombre de paires de pôles du rotor. La loi de couple purement sinusoïdale est chosie ici uniquement à titre d'exemple et pour les besoins de la présente description, le principe de fonctionnement du présent circuit de commande étant également applicable à des moteurs ayant des lois de couples quelconques. La variation des couples $M_a$ ($N\alpha$) et $M_b$ ($N\alpha$) est représentée dans le diagramme de la fig. 2 par des courbes A et B, pour un sens arbitraire positif du courant, tel que le sens des courants $i_1$ et $i_2$ selon la Fig. 1. Pour le sens inverse du courant, les couples correspondants sont décalés de 180°, tel qu'indiqué par les courbes $\overline{A}$ et $\overline{B}$.

Dans le présent moteur avec rotor à aimant permanent, chaque phase A et B est le siège d'une tension induite de mouvement qui peut être décrite, respectivement, sous la forme

$$U_{ma} = K_o\omega\sin N\alpha \quad et$$
$$U_{mb} = K_o\omega \cos N\alpha$$

où $\omega$ représente la vitesse de rotation mécanique du rotor exprimée en radians par seconde. Ces tensions induites peuvent ainsi être représentées en fonction du temps t par les mêmes courbes A et B de la fig. 2.

Si l'on admet que chaque bobine élémentaire possède une inductance L et une résistance ohmique R, que l'inductance mutuelle entre les bobines élémentaires d'une même phase est $L_{12}$, et que le circuit magnétique présente un comportement linéaire, les tensions apparaissant, respectivement, aux bornes des bobines $A_1$, $B_1$, $A_2$, $B_2$ s'expriment, dans le cas de l'état d'alimentation AB, dans lequel une tension d'alimentation $+ U_{a1}$ est appliquée entre les bornes 41 et 43, comme suit:

$$U_{a1} = Ri_1 + Ldi_1/dt + L_{12}di_2/dt + U_{ma}$$
$$U_{b1} = Ri_1 + Ldi_1/dt + L_{12}di_2/dt + U_{mb}$$
$$U_{a2} = Ri_1 + Ldi_2/dt + L_{12}di_1/dt + U_{ma}$$
$$U_{b2} = Ri_2 + Ldi_2/dt + L_{12}di_1/dt + U_{mb}$$

$i_1$ et $i_2$ étant les courants dans les branches respectives 41,42,43 et 41,44,43 de la fig. 1. Du fait que

$$U_{41,43} = U_{a1} + U_{b1} = U_{a2} + U_{b2}$$

il résulte que $i_1 = i_2 = i/2$,
i désignant le courant total entre les bornes 41 et 43.

Dans ces conditions, la tension entre les bornes 42 et 44,

$$U_{42,44} = U_{b1} U_{a2} = Ri/2 + Ldi/2dt + L_{12}di/2dt + U_{mb} - - Ri/2 - Ldi/2dt - L_{12}di/2dt - U_{ma}$$

d'où

$$U_{42,44} = U_{mb} - U_{ma} \qquad \text{alors que}$$
$$U_{41,43} = + U_{a1} .$$

Le moteur passant par les états d'alimentation AB, $\overline{A}B$, $\overline{A}\overline{B}$, $A\overline{B}$, l'on trouve, de façon similaire, dans l'état d'alimentation $\overline{A}B$, dans lequel la tension d'alimentation $+ U_{a1}$ est appliquée entre les bornes 42 et 44, c.à.d. que

$$U_{42,44} = + U_{a1} \qquad ,\text{que}$$
$$U_{41,43} = U_{ma} + U_{mb}.$$

De même, dans l'état suivant $\overline{A}\overline{B}$

$$U_{41,43} = - U_{a1} \qquad \text{et}$$
$$U_{42,44} = U_{mb} - U_{ma}$$

et, dans l'état $A\overline{B}$,

$$U_{42,44} = - U_{a1} \qquad \text{et}$$
$$U_{41,43} = U_{ma} + U_{mb}$$

On remarquera que les tensions $U_{41,43}$ et $U_{42,44}$ présentent des passages par zéro directement liés à des positions mécaniques du rotor bien précises. En effet,

$$U_{41,43} = U_{ma} + U_{mb} = K_o\omega(\sin N\alpha + \cos N\alpha) = O$$
$$\text{pour } N\alpha = - \pi / 4 \mp n \pi \qquad \text{et}$$
$$U_{42,44} = U_{mb} - U_{ma} = K_o\omega(\cos N\alpha - \sin N\alpha) = O$$
$$\text{pour } N\alpha = + \pi / 4 \pm n \pi .$$

Dans la fig. 2, les variations dans le temps des tensions $U_{41,43}$ et $U_{42,44}$ ont été représentées et les quatre positions particulières du rotor par cycle d'alimentation qui correspondent aux instants de passage par zéro, $t_1$, $t_2$, $t_3$, $t_4$ de ces tensions, ont été indiquées par $N\alpha_1$, $N\alpha_2$, $N\alpha_3$, $N\alpha_4$.

Selon le schéma de la fig. 1, les quatre bornes 41,42,43,44 du bobinage 4 sont reliées à un circuit d'alimentation 5, de structure connue, alimenté par une source de tension externe $U_{a1}$ et commandé par des signaux logiques qui lui sont appliqués par des lignes 6 et 7 de manière à définir les quatre états d'alimentation susmentionnés AB,$\overline{A}B$, $\overline{A}\overline{B}$, $A\overline{B}$. Ces signaux logiques sont engendrés par un compteur en anneau 8 qui provoque la transition d'un état à un autre dans un ordre séquentiel défini, chaque fois qu'il reçoit sur une entrée, reliée par une ligne 9 à un circuit monostable 16, une impulsion de commande de commutation.

Les bornes 41 et 43 sont par ailleurs reliées aux entrées d'un premier comparateur 10 et les bornes 42 et 44 aux entrées d'un deuxième comparateur 11. Les sorties de ces comparateurs sont reliées à des entrées respectives d'une première porte logique OU exclusif 13.

Les signaux logiques apparaissant sur les lignes 6,7 sont appliqués aux entrées d'une deuxième porte logique OU exclusif 12, et les sorties des portes 12 et 13 sont reliées aux entrées d'une troisième porte logique OU exclusif 14. La sortie de cette porte 14 est reliée par une ligne 15 au circuit monostable 16.

Le fonctionnement de ce circuit de commande s'explique en consultant les variations des tensions $U_{41,43}$ et $U_{42,44}$ selon la fig. 2. Dans l'état d'alimentation AB, le comparateur 10 voit une tension différentielle positive sur ses entrées et fournit, par conséquent, à sa sortie, un signal correspondant à un état logique 1. Le comparateur 11 reçoit la tension $U_{42,44}$ qui, à un instant $t_o$, selon la fig. 2, est négative, de sorte que ce comparateur délivre un signal logique O. La sortie de la porte OU exclusif 13 est donc à l'état 1.

Les signaux fournis par le circuit 8 dans cet état d'alimentation créent des états 1,1 aux entrées respectives de la porte OU exclusif 12, de sorte que la sortie de celle-ci est à l'état O et la sortie de la porte 14, par conséquent, à l'état 1.

A l'instant $t_1$, lorsque le rotor passe par la position $N\alpha_1$, $U_{ma}(t_1) = U_{mb}(t_1)$ et la tension $U_{42,44}$ à l'entrée de la porte 11 change de signe. Ceci entraîne une transition à la sortie de cette porte qui à son tour provoque un changement d'état à la sortie de la porte 14. Cette transition sur la ligne 15 produit, par l'intermédiaire du circuit 16 une impulsion de commande de commutation qui actionne le compteur en anneau 8 et provoque la commutation de l'état d'alimentation de AB en $\overline{A}B$. Ceci fait passer la porte 12 de l'état de sortie O à l'état 1, ce qui a pour effet de changer l'état de sortie de la porte 14 de O en 1, les signaux des comparateurs 10 et 11 n'étant pas affectés par le changement d'état d'alimentation.

Le compteur 8 pouvant être conçu pour réagir au flanc arrière de l'impulsion fournie par le circuit monostable 16, le choix de la durée de cette impulsion permet de définir l'instant précis de la commutation selon le cas d'application particulier. Une autre solution pour optimiser l'instant de commutation, consiste à prévoir un circuit de retard aux entrées des comparateurs, tel qu'un circuit RC formé par les résistances r et les condensateurs C comme les montre la fig. 1. Dans ce contexte, il est important de noter que les passages par zéro des tensions $U_{41,43}$ et $U_{42,44}$ se produisent nettement en avance par rapport au passage par zéro correspondant de la tension induite $U_{ma}$, par exemple.

Une fois que la commutation susmentionnée de l'état AB à l'état $\overline{AB}$ a été effectuée, c'est le comparateur 10 auquel est appliqué la tension $U_{41,43}$, qui détectera la prochaine position particulière du rotor $N\alpha_2$ à l'instant $t_2$. La sortie de 10 changeant d'état, il se produit une nouvelle transition du signal à la sortie de 14 de l'état logique 1 à l'état logique O. La détection des autres positions $N\alpha_3$ et $N\alpha_4$ s'effectue d'une manière tout à fait similaire.

L'agencement des portes logiques selon le schéma de la fig. 2 permet, de façon particulièrement simple, d'associer à chaque transition de l'état 1 à l'état O du signal de sortie de la porte 14, la détection d'une des positions particulières susmentionnées du rotor.

Il est à noter que le fonctionnement du présent circuit de commande ne dépend pas de la forme du courant circulant dans le bobinage et que le moteur peut, par exemple, être alimenté à partir d'une source de courant à découpage.

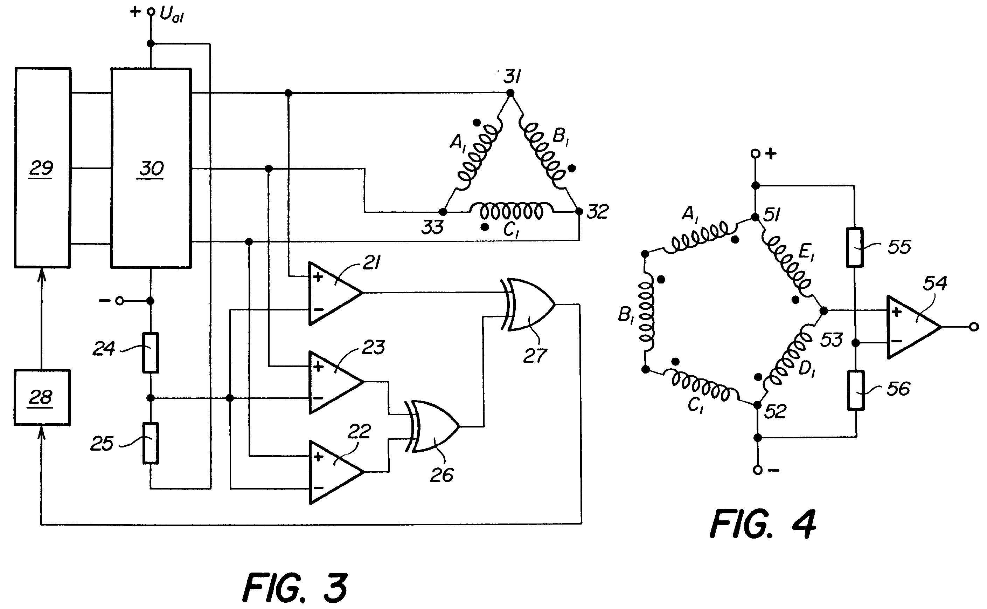

La fig. 3 est un schéma d'un circuit de commande similaire, utilisé dans le cas d'un moteur triphasé avec trois bobines élémentaires $A_1, B_1, C_1$, connectées en triangle entre des bornes 31,32,33.

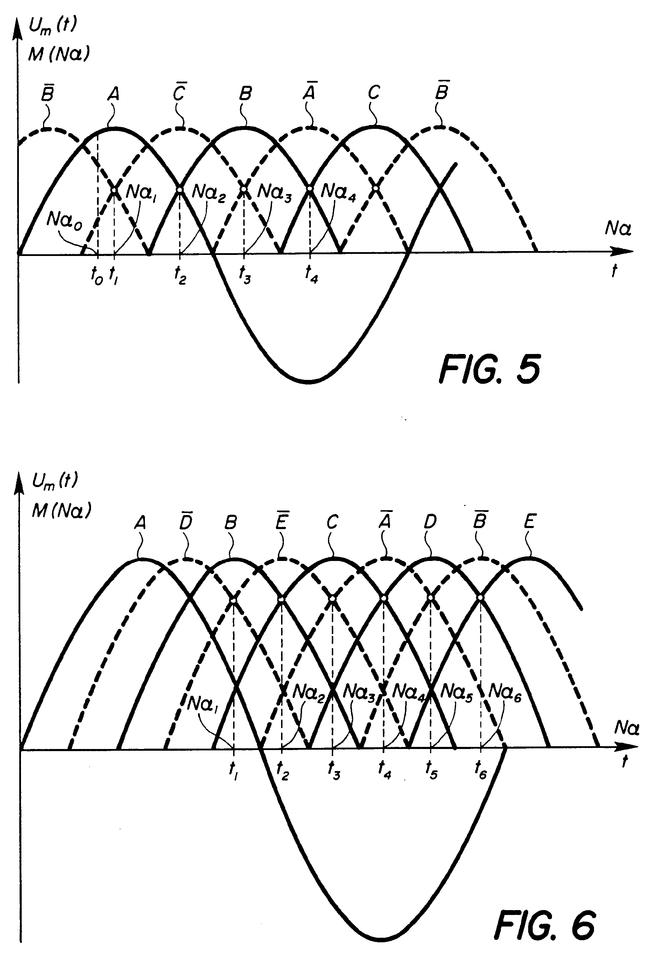

Le couple M ($N\alpha$), associé à chaque phase A,B et C, est représenté à la fig. 5 par des courbes désignées par A ou $\overline{A}$, B ou $\overline{B}$, C ou $\overline{C}$, selon le sens du courant dans les bobines concernées. Le sens de l'enroulement de ces bobines a été marqué par un point sur la fig. 3 comme précédemment.

Dans l'état d'alimentation $A, \overline{B}, \overline{C}$, par exemple, une tension d'alimentation $+U_{a1}$ est appliquée entre les bornes 31 et 33, de sorte que la bobine $A_1$ est parcourue par un courant positif, et les bobines $B_1$ et $C_1$ par un courant négatif. Si l'on se réfère à l'instant $t_o$ selon la fig. 5, ces trois courants engendrent tous, dans la position $N_o$ du rotor, des couples positifs. A l'instant $t_1$ indiqué à la fig. 5, les tensions $U_m$ induites dans les bobines $B_1$ et $C_1$ et représentées par les courbes $\overline{B}$ et $\overline{C}$, sont égales, ce qui permet de détecter la position correspondante $N\alpha_1$) du rotor. De façon similaire, on peut détecter des positions particulières $N\alpha_2$, $N\alpha_3$, $N\alpha_4$ etc. qui sont décalées de 60° les unes des autres, de sorte que six positions particulières sont détectées par cycle complet.

Le circuit de la fig. 3 permet d'effectuer cette détection et la commande de la commutation de façon particulièrement simple et économique.

Ce circuit comprend trois comparateurs 21,22,23, dont une première entrée est connectée, respectivement, aux bornes 31,32,33 du bobinage $A_1$,

$B_1$, $C_1$, et dont les deuxièmes entrées sont reliées en commun au point milieu d'un diviseur de tension représenté par deux résistances 24,25 connectées en série entre les bornes + et - de la source de courant d'alimentation. Les sorties des comparateurs 22 et 23 sont reliées à des entrées respectives d'une première porte logique OU exclusif 26, dont la sortie est à son tour reliée à une entrée d'une deuxième porte logique OU exclusif 27. La deuxième entrée de cette deuxième porte est reliée à la sortie du comparateur 21. La sortie de la porte 27 commande d'un circuit monostable 28, dont le signal de sortie est appliqué à un compteur en anneau 29. Ce dernier délivre des signaux de commutation à un circuit de puissance 30, tel qu'un pont de transistors, qui applique la tension d'alimentation, selon les états d'alimentation successifs, à deux des bornes 31,32,33 du bobinage, selon une technique bien connue.

A la lumière de la description donnée plus haut, on voit aisément que dans chaque état d'alimentation deux des comparateurs 21,22,23 présentent un état de sortie O, car deux des trois bornes 31,32,33 sont à un potentiel défini par la source de tension d'alimentation. La troisième borne, qui est flottante, permet de détecter l'instant où les tensions induites dans les bobines temporairement connectées en série entre les bornes de la source de tension d'alimentation, sont égales. Ainsi, dans l'état d'alimentation $A\overline{BC}$, les comparateurs 21 et 23 auront respectivement les états de sortie 1 et O, alors que le comparateur 22 va passer de l'état de sortie 1 à l'état de sortie O au moment du passage du rotor par la position $N\alpha_1$. Cette transition va provoquer une transition de 1 à 0 de l'état de sortie de la porte 26, et, par conséquent, une transition de l'état de sortie de la porte 27 de O à 1. D'une façon, similaire au cas décrit précédemment, le circuit monostable va être actionné par cette dernière transition et commander le compteur 29 pour produire un changement d'état d'alimentation.

La fig. 4 montre schématiquement le cas d'un moteur pentaphasé à cinq bobines élémentaires $A_1$ à $E_1$. Dans l'état d'alimentation représenté, les bobines $A_1, B_1, C_1$ sont branchées en série entre des bornes 51 et 52 reliées à des bornes +,- d'une source d'alimentation, et, parallèlement, les bobines $E_1$ et $D_1$ sont connectées aux mêmes bornes 51 et 52. Avec les conventions habituelles, cet état s'écrit $ABC\overline{DE}$. Le point de connexion commun 53 des bobines $E_1$ et $D_1$ est relié à une première entrée d'un comparateur 54, alors que la deuxième entrée de celui-ci est reliée au point milieu d'un diviseur de tension représenté par les résistances 55 et 56 connectées en série entre les bornes de la source de tension d'alimentation. Le comparateur 54 permet de détecter, comme dans les cas précédents, l'instant où la tension de la borne 53 sera égale à celle de la tension de référence définie par le diviseur de tension 55,56. Dans la fig. 6, qui est une représentation similaire à celle de la fig. 5, cet instant est désigné par $t_1$, correspondant à une position $N\alpha_1$ du rotor à détecter.

Le circuit complet correspondant au cas du moteur pentaphasé comporte, bien entendu, cinq comparateurs différents reliés par une de leurs entrées aux différents points de connexion communs des bobines élémentaires, et par leur autre entrée au point milieu du diviseur de tension. La transition apparaissant à la sortie de ces comparateurs est utilisée dans des circuits logiques similaires à ceux décrits précédemment.

Ce circuit de commande permet ainsi de détecter, par cycle complet d'alimentation du moteur, dix positions particulières du rotor espacées de 36° électriques, dont six, $N\alpha_1$ à $N\alpha_6$ sont indiquées à la fig. 6.

Dans le cas de moteurs tétraphasés, comme dans celui des moteurs biphasés selon la fig. 1, il est à noter que le potentiel de référence est de préférence fourni par le bobinage lui-même, ce qui conduit à une simplification supplémentaire, illustrée par le cas décrit en rapport avec la fig. 1.

**Revendications**

1. Circuit de commande pour un moteur électrique sans collecteur, du type comportant un rotor (1) aimanté de façon à présenter au moins une paire de pôles magnétiques, et un stator muni d'un bobinage (4) bi- ou polyphasé comprenant plusieurs bobines élémentaires de même impédance, ce circuit comportant des moyens électroniques de commutation (5, 8) agencés pour connecter les bobines élémentaires ($A_1$, $A_2$, $B_1$, $B_2$) des différentes phases sélectivement, selon un cycle d'états d'alimentation successifs aux bornes d'une source de courant ($U_{al}$), sous l'effet d'un signal de commande de commutation, des moyens (10, 11) pour détecter les tensions apparaissant aux bornes de bobines élémentaires, et des moyens (12, 13, 14, 16) pour fournir à partir desdites tensions détectées ledit signal de commande de commutation, caractérisé en ce que, les bobines élémentaires du bobinage (4) étant connectées en série entre elles, le circuit de commande comporte des moyens comparateurs (10, 11) pour fournir, dans chaque état d'alimentation, un signal de détection lors du passage par une valeur de référence de la tension du point de connexion commun, non relié à la source de courant, de deux bobines élémentaires consécutives appartenant à des phases différentes, les moyens (12, 13, 14, 16) pour fournir ledit signal de commande de commutation étant commandés par ledit signal de détection.

2. Circuit de commande selon la revendication 1 pour un moteur bi-, tri-, tétra- ou pentaphasé à deux, trois, quatre ou cinq bobines élémentaires, dont deux ($E_1$, $D_1$) sont connectées en série, dans chaque état d'alimentation, aux bornes de la source de courant, caractérisé en ce qu'il comporte des comparateurs (54) dont les entrées sont branchées entre le point de connexion commun desdites deux bobines élémentaires connectées en série entre les bornes de la source de courant, et le point intermédiaire (53) d'un diviseur de tension branché entre ces bornes de la source de courant.

3. Circuit de commande selon la revendication 1 pour un moteur bi- ou tétraphasé, à quatre bobines élémentaires, caractérisé en ce qu'il comporte des comparateurs (10, 11) dont les entrées sont branchées entre les points de connexion communs des bobines élémentaires non reliés à la source de courant.

4. Circuit de commande selon la revendication 1, pour un moteur bi- ou tétraphasé, à quatre bobines élémentaires, caractérisé en ce qu'il comporte deux comparateurs (10, 11) branchés en permanence, respectivement, entre deux points de connexion opposés (41, 43; 42, 44) des bobines élémentaires, et en ce que les signaux de sortie de ces comparateurs sont fournis à des entrées respectives d'une première porte logique OU exclusif (13), le signal de détection apparaissant à la sortie de cette porte logique.

5. Circuit de commande selon la revendication 4, caractérisé en ce qu'il comporte au moins une deuxième porte logique OU exclusif (12), dont les entrées sont commandées par des signaux reflétant les états d'alimentation successifs du moteur, et dont la sortie est reliée à une des entrées d'une troisième porte logique OU exclusif (14), la deuxième entrée de cette troisième porte logique étant reliée à la sortie de la première porte logique (13) et la sortie de cette troisième porte logique étant reliée à un circuit monostable (16) fournissant ledit signal de commande de commutation.

6. Circuit de commande selon la revendication 2 pour un moteur tri-phasé, à trois bobines élémentaires ($A_1$, $B_1$, $C_1$), caractérisé en ce qu'il comporte trois comparateurs (21, 22, 23), dont des premières entrées sont branchées respectivement aux points de connexion communs des trois bobines élémentaires, et dont des deuxièmes entrées sont branchées audit point intermédiaire du diviseur de tension (24, 25), et en ce que les sorties de deux des comparateurs sont reliées aux entrées d'une première porte logique OU exclusif (26), la sortie de cette porte et la sortie du troisième comparateur (21) étant reliées, respectivement, aux entrées d'une deuxième porte logique OU exclusif (27), dont la sortie est reliée à un circuit monostable (28) fournissant ledit signal de commande de commutation.

7. Circuit de commande selon l'une des revendications 2 à 6, caractérisé en ce que ledit branchement des entrées d'au moins l'un des comparateurs est réalisé par l'intermédiaire d'un circuit de retard.

**Patentansprüche**

1. Steuerschaltung für einen kollektorlosen elektrischen Motor des Typs, der einen Rotor (1) besitzt, welcher solcherart magnetisiert ist, dass er mindestens ein Paar magnetischer Pole aufweist, und einen Stator, der mit einer zwei- oder mehrphasigen Wicklung (4) versehen ist, welche mehrere Teilspulen gleicher Impedanz umfasst, wobei diese Steuerschaltung elektronische Schaltmittel (5, 8) aufweist, die dazu ausgebildet sind, unter der Wirkung eines Schaltsteuerungssignals die Teilspulen ($A_1$, $A_2$, $B_1$, $B_2$) der verschiedenen Phasen wahlweise, entsprechend einem Zyklus von aufeinanderfolgenden Speisungszuständen, mit den Klemmen einer Stromquelle ($U_{a1}$) zu verbinden, Mittel (10, 11) zur Erfassung der an den Klemmen der Teilspulen auftretenden Spannungen und Mittel (12, 13, 14, 16) zur Abgabe des genannten Schaltsteuerungssignals aufgrund der genannten erfassten Spannungen, dadurch gekennzeichnet, dass bei untereinander in Serie geschalteten Teilspulen der Wicklung (4) die Steuerschaltung Komparatorvorrichtungen (10, 11) aufweist, um in jedem Speisungszustand ein Detektionssignal zu dem Zeitpunkt abzugeben, in dem die Spannung des gemeinsamen, nicht mit der Stromquelle verbundenen Verbindungspunktes zweier aufeinanderfolgender Teilspulen, die zu verschiedenen Phasen gehören, durch einen Bezugswert geht, wobei die Mittel (12, 13, 14, 16) zur Abgabe des genannten Schaltsteuerungssignals von dem genannten Detektionssignal gesteuert werden.

2. Steuerschaltung gemäss Patentanspruch 1 für einen Zwei-, Drei-, Vier- oder Fünfphasen-Motor mit zwei, drei, vier oder fünf Teilspulen, von denen zwei ($E_1$, $D_1$) in jedem Speisungszustand in Serie an die Klemmen der Stromquelle angeschlossen sind, dadurch gekennzeichnet, dass sie Komparatoren (54) aufweist, deren Eingänge zwischen dem gemeinsamen Verbindungspunkt der beiden genannten, in Serie zwischen den Klemmen der Stromquelle geschalteten Teilspulen und dem Zwischenpunkt (53) eines Spannungsteilers, der zwischen diesen Klemmen der Stromquelle liegt, geschaltet sind.

3. Steuerschaltung nach Patentanspruch 1 für einen Zwei- oder Vierphasen-Motor mit vier Teilspulen, dadurch gekennzeichnet, dass sie Komparatoren (10, 11) aufweist, deren Eingänge zwischen den gemeinsamen, nicht mit der Stromquelle verbundenen Verbindungspunkten der Teilspulen geschaltet sind.

4. Steuerschaltung nach Patentanspruch 1 für einen Zwei- oder Vierphasen-Motor mit vier Teilspulen, dadurch gekennzeichnet, dass sie zwei Komparatoren (10, 11) aufweist, die ständig jeweils zwischen zwei gegenüberliegenden Verbindungspunkten (41, 43; 42, 44) der Teispulen geschaltet sind, und dass die Ausgangssignale dieser Komparatoren den entsprechenden Eingängen eines ersten logischen Exklusiv-ODER-Gatters (13) zugeführt werden, wobei das Detektionssignal am Ausgang dieses logischen Gatters auftritt.

5. Steuerschaltung nach Patentanspruch 4, dadurch gekennzeichnet, dass sie mindestens ein zweites logisches Exklusiv-ODER-Gatter (12) aufweist, dessen Eingänge von Signalen gesteuert werden, welche die aufeinanderfolgenden Speisungszustände des Motors beschreiben, und deren Ausgang mit einem der Eingänge eines dritten logischen Exklusiv-ODER-Gatters (14) verbunden ist, wobei der zweite Eingang dieses dritten logischen Gatters mit dem Ausgang des ersten logischen Gatters (13) verbunden ist, und der Ausgang dieses dritten logischen Gatters mit einer monostabilen Schaltung (16) verbunden ist, welche das genannte Schaltsteuerungssignal abgibt.

6. Steuerschaltung nach Patentanspruch 2 für einen Dreiphasen-Motor mit drei Teilspulen ($A_1$, $B_1$, $C_1$), dadurch gekennzeichnet, dass sie drei Komparatoren (21, 22, 23) aufweist, deren erste Eingänge jeweils mit den gemeinsamen Verbindungspunkten der drei Teilspulen verbunden sind und deren zweite Eingänge mit dem genannten Zwischenpunkt des Spannungsteilers (24, 25) verbunden sind, und dass die Ausgänge von zweien der Komparatoren mit den Eingängen eines ersten logischen Exklusiv-ODER-Gatters (26) verbunden sind, wobei der Ausgang dieses Gatters und der Ausgang des dritten Komparators (21) jeweils mit den Eingängen eines zweiten logischen Exklusiv-ODER-Gatters (27) verbunden sind, dessen Ausgang mit einer monostabilen Schaltung (28) verbunden ist, welche das genannte Schaltsteuerungssignal abgibt.

7. Steuerschaltung nach einem der Patentansprüche 2 bis 6, dadurch gekennzeichnet, dass die genannte Verbindung der Eingänge mindestens eines der Komparatoren über einen Verzögerungskreis erfolgt.

**Claims**

1. A control circuit for an electric motor without a collector, of the type comprising a rotor (1) magnetized so as to exhibit at least one pair of magnetic poles, and a stator provided with a di- or polyphase winding (4) comprising several elementary coils of the same impedance, this circuit comprising electronic commutation means (5, 8) arranged for connecting selectively the elementary coils ($A_1$, $A_2$, $B_1$, $B_2$) of the different phases according to a cycle of successive supply states to the terminals of a current source ($U_{a1}$) under the effect of a commutation control signal, means (10, 11) for detecting the voltages appearing at the terminals of elementary coils, and means (12, 13, 14, 16) for providing, from said detected voltages, said commutation control signal, characterized in that, the elementary coils of the winding (4) being connected together in series, the control circuit comprises comparator means (10, 11) for providing, in each supply state, a detection signal at the passage through a reference value of the voltage of the common connection point, non-connected to the current source, of two consecutive elementary coils belonging to different phases, the means (12, 13, 14, 16) for providing said commutation control signal being controlled by said detection signal.

2. A control circuit according to claim 1 for a di-, tri-, tetra- or pentaphase motor having two, three, four or five elementary coils, two of which ($E_1$, $D_1$) are connected in series, in each supply state, to the terminals of the current source, characterized in that it comprises comparators (54), the inputs of which are connected between the common connection point of said two elementary coils connected in series between the terminals of the current source, and the intermediate point (53) of a voltage divider connected between these terminals of the current source.

3. A control circuit according to claim 1 for a di- or tetraphase motor with four elementary coils, characterized in that it comprises comparators (10, 11) the inputs of which are connected between the common connection points of the elementary coils non-connected to the current source.

4. A control circuit according to claim 1 for a di- or tetraphase motor with four elementary coils, characterized in that it comprises two comparators (10, 11) connected permanently between, respectively, two opposite connection points (41, 43; 42, 44) of the elementary coils, and in that the output signals of these comparators are delivered to respective inputs of a first logical exclusive OR gate (13), the detection signal appearing at the output of this logical gate.

5. A control circuit according to claim 4, characterized in that it comprises at least a second logical exclusive OR gate (12), the inputs of which are controlled by signals which reflect the successive supply states of the motor, and the output of which is connected to one of the inputs of a third logical exclusive OR gate (14), the second input of this third logical gate being connected to the output of the first logical gate (13) and the output of this third logical gate being connected to a monostable circuit (16) providing said commutation control signal.

6. A control circuit according to claim 2 for a triphase motor with three elementary coils ($A_1$, $B_1$, $C_1$), characterized in that it comprises three comparators (21, 22, 23), the first inputs of which are connected, respectively, to the common connection points of the three elementary coils, and the second inputs of which are connected to said intermediate point of the voltage divider (24, 25), and in that the outputs of two of the comparators are connected to the inputs of a first logical exclusive OR gate (26), the output of this gate and the output of the third comparator (21) being connected, respectively, to the inputs of a second logical exclusive OR gate (27), the output of which is connected to a monostable circuit (28) providing said commutation control signal.

7. A control circuit according to one of claims 2 to 6, characterized in that the connection of the inputs of at least one of the comparators is achieved through a delay circuit.

**FIG. 1**

FIG. 2

FIG. 3

FIG. 4

EP 0 433 219 B1

FIG. 5

FIG. 6